# EUROPÄISCHE PATENTSCHRIFT

(11) **EP 2 060 392 B1**
(45) Veröffentlichungstag und Bekanntmachung des Hinweises auf die Patenterteilung: **11.05.2011**
(21) Anmeldenummer: 08019323.8
(22) Anmeldetag: 05.11.2008
(51) Int. Cl.: B32B 27/36, A01N 25/10, B65D 81/24

(54) **Antimikrobiell ausgeruestete, biaxial orientierte Polyesterfolie**
Antimicrobial equipped, biaxial oriented polyester film
Feuille de polyester antimicrobienne et orienté de manière biaxiale

(30) Priorität: 14.11.2007 DE 102007054132
(43) Veröffentlichungstag der Anmeldung: 20.05.2009
(73) Patentinhaber: Mitsubishi Polyester Film GmbH, 65203 Wiesbaden (DE)
(72) Erfinder: Kliesch, Holger, Dr., 65462 Ginsheim-Gustavsburg (DE); Kuhmann, Bodo, 65594 Runkel (DE); Fischer, Ingo, 65558 Heistenbach (DE); Bothe, Lothar, Dr., 55124 Mainz (DE); Konrad, Matthias, Dr., 65719 Hofheim (DE)
(74) Vertreter: Schweitzer, Klaus

(56) Entgegenhaltungen:
- EP-A- 0 116 865
- EP-A- 0 288 063
- WO-A-00/30697
- WO-A-2008/151948
- FR-A- 2 811 304
- US-A- 5 556 699
- DATABASE WPI Week 199719 Thomson Scientific, London, GB; AN 1997-208089 XP002512896 & JP 09 057923 A (TORAY IND INC) 4. März 1997 (1997-03-04)
- DATABASE WPI Week 198740 Thomson Scientific, London, GB; AN 1987-280759 XP002512897 & JP 62 195038 A (HAGIWARA GIKEN KK) 27. August 1987 (1987-08-27)
- DATABASE WPI Week 199719 Thomson Scientific, London, GB; AN 1997-208088 XP002512898 & JP 09 057922 A (TORAY IND INC) 4. März 1997 (1997-03-04)

## Beschreibung

Die Erfindung betrifft eine mehrschichtige, antimikrobiell ausgerüstete, biaxial orientierte Polyesterfolie, bestehend aus mindestens einer Basisschicht (B) und einer auf dieser Basisschicht aufgebrachten Deckschicht (A) mit antimikrobieller Ausrüstung. Die Erfindung betrifft weiterhin ein Verfahren zur Herstellung der Folie und ihre Verwendung.

Die erfindungsgemäßen Folien und daraus hergestellte Artikel eignen sich insbesondere für die Verwendung in medizinischen Geräten und Verpackungen, Wänden von Kühlhäusern (z. B. als Laminat auf Stahl), Oberflächen in Großküchen, Krankenhäusern etc. Insbesondere eignen sich die Folien sehr gut für die Abdeckung und somit zum Schutz von metallischen Oberflächen, auf die die Folien heißgesiegelt oder mit Klebern auflaminiert werden.

Antimikrobiell ausgerüstete, biaxial orientierte Polyesterfolien sind bereits bekannt.

In der WO 2002/062577 werden mit Triclosan antimikrobiell ausgerüstete Polyesterfolien beschrieben. Die Migration von Triclosan aus PET ist jedoch sehr langsam, so dass eine effektive antimikrobielle Wirkung nur bei hohen Beladungen möglich ist. Zudem ist Triclosan eine chlorierte organische Verbindung, welche bei der Regenerierung (z. B. der im Folienproduktionsprozess anfallenden Folienränder) zu potentiell toxischen Chlorverbindungen weiterreagieren kann. Zudem ist Triclosan aus Umweltschutzgründen und wegen der Gefahr von Resistenzbildungen in vielen Anwendungen unerwünscht.

In der WO 2006/000755 werden mit einem Silberionen enthaltenden Zirkoniumphosphat ausgestattete Polyesterfolien beschrieben. Aufgrund der Schichtstruktur dieser Phosphate stehen nur kleine Austrittsspalten für das Silber zur Verfügung, was ebenfalls relativ hohe Beladungen zur effektiven Abwehr von Mikroorganismen nötig macht.

In der US-A-5,556,699 werden mit einem Silberionen enthaltenden Zeolith ausgestattete Polymerfolien beschrieben. Polyester sind zwar als geeignete Polymersubstrate erwähnt, in den Ausführungsbeispielen sind jedoch keine Polyesterfolien beschrieben. In der Patentschrift sind geeignete Zeolithe in verschiedenen Größen beschrieben, die in Folien mit unterschiedlicher Schichtstruktur eingebracht wurden. Bei den für die beschriebenen Folien eingesetzten Polymeren zeigte sich zudem eine Abnahme der antimikrobiellen Wirkung bei einer Teilchengröße des Zeoliths in der Region der Dicke der mit diesem Zeolith ausgestatteten Schicht.

Aufgabe der vorliegenden Erfindung war es, eine antimikrobiell wirksame Folie auf Basis biaxial gestreckter Polyester bereitzustellen, die bei möglichst geringer Beladung mit Silber einen ausreichenden Effekt aufweist.

Die Aufgabe wird belöst durch eine mindestens zweischichtige Polyesterfolie, die mindestens eine antimikrobiell ausgerüstete Deckschicht aufweist, wobei diese antimikrobiell ausgerüstete Schicht
a) 0,5 - 15 Gewichtsprozent eines mit Silber beladenen Zeoliths enthält und
b1) eine Schichtdicke < 8 µm aufweist und
b2) diese Schichtdicke dabei nicht größer ist als das 1,3fache der mittleren Teilchengröße des Zeoliths.

Das Silber liegt dabei im Zeolith in Form von Silberionen oder in Form von elementarem Silber vor, wobei bevorzugt die Hauptmenge (>50 Gew.-%) und besonders bevorzugt die Gesamtmenge (100 Gew.-%) in Form von Silberionen vorliegt.

Erfindungsgemäß ist die Folie zumindest zweischichtig und umfasst die Basisschicht (B), die antimikrobiell ausgestattete Deckschicht (A) und gegebenenfalls weitere Schichten. In der bevorzugten Ausführungsform ist die Folie dreischichtig. Die zweite Deckschicht (C) kann dabei ebenfalls antimikrobiell ausgerüstet sein, so dass eine Verwechselung der Seiten in der Endanwendung nicht zu einem Verlust der antimikrobiellen Wirksamkeit führt. In einer weiteren bevorzugten Ausführungsform ist die Deckschicht (C) siegelfähig, so dass sich die Folie u. a. gegen Stahlblech laminieren lässt. Siegelfähige Schichten sind z.B. in EP-A-1 138 480, EP-A-1 097 809, EP-A-1 471 098, EP-A-1 165 317 beschrieben und bestehen in der Regel aus Copolyestern. Neben der Basisschicht und einer oder zwei Deckschichten kann die Folie weitere Zwischenschichten enthalten, die bevorzugt nicht antimikrobiell ausgestattet sind, da dieses Material nicht in ausreichender Weise an die Oberfläche migrieren kann und so das zusätzliche antimikrobielles Additiv nicht wirksam wird.

### Material für Basisschicht (B), Zwischenschichten und nicht siegelfähige Deckschichten (C)

Die genannten Schichten der Folie bestehen bevorzugt zu mindestens 80 Gew.-% aus einem thermoplastischen Polyester. Neben Polyestern können zu maximal 20 Gew.-% Polyamide, Polyetherimide und andere Polymere enthalten sein. Bevorzugt liegt der Anteil solcher Polymere bei unter 5 Gew.-% und besonders bevorzugt bei < 1 Gew.-%.

Geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethyl-cyclohexan und Terephthalsäure (= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Polyester, die zu mindestens 60 Mol-%, und besonders bevorzugt mindestens 80 Mol-%, aus Ethylenglykol- und Terephthalsäure-Einheiten bestehen. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, Polyethylenglykol der allgemeinen Formel HO-((CH₂)₂-O)ₙ-(CH₂)₂-OH, wobei n eine Zahl von 3 - 1000 darstellt, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoffatomen. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH geeignet, sollten jedoch einen Anteil von 5-Gew.%, bevorzugt 1 Gew.-% nicht überschreiten.

Andere aromatische Dicarbonsäuren sind bevorzugt Benzoldicarbonsäuren, Naphtalindicarbonsäuren, beispielsweise Naphthalin-1,4- oder -1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die (C₃ bis C₁₉)-Alkandisäuren besonders geeignet, wobei der Alkananteil geradkettig oder verzweigt sein kann.

In einer thermoformbaren Ausführungsform besteht das Basisschichtpolymer bevorzugt zu weniger als 95 Mol-% aus Ethylenglykol- und Terephthalsäure-Einheiten und besonders bevorzugt zu weniger als 90 Mol-% aus Ethylenglykol- und Terephthalsäure-Einheiten.

Polymere für eine etwaige siegelfähige Deckschicht (C) sind z. B. in den zuvor genannten EP-A-1 138 480, EP-A-1 097 809, EP-A-1 471 098, EP-A-1 165 317 zu finden, ohne auf die dort genannten Abmischungen beschränkt zu sein.

### Material für antimikrobiell ausgerüstete Deckschicht (A), und gegebenenfalls vorhandene weitere antimikrobiell ausgerüstete Deckschicht (C)

Das Polymer für diese Deckschicht entspricht im Wesentlichen dem für die Basisschicht (B). Bevorzugt sind auch hier Polyester, die zu mindestens 60 Mol-% und besonders bevorzugt mindestens 80 Mol-% aus Ethylenglykol- und Terephthalsäure-Einheiten bestehen. Es hat sich jedoch als günstig erwiesen, wenn der Polyester zu weniger als 99 Mol-% und bevorzugt zu weniger als 97 Mol-% aus Ethylenglykol- und Terephthalsäureeinheiten aufgebaut ist. Ein höherer Anteil an Copolyester erleichtert zwar die Freisetzung von Silberionen aus dem Zeolith in das darüber liegende Medium und verbessert die Wirksamkeit, ein hoher Copolyesteranteil verringert aber auf der anderen Seite die Widerstandsfähigkeit der Schicht und kann so, insbesondere wenn die Oberfläche mit lösemittelhaltigen Reinigungsmitteln (Ethanol, Aceton etc.) gereinigt wird, zu einem schnellen Verlust der Aktivität und zu optischen Veränderungen der Oberfläche führen.

Die folgenden Bereiche sind daher zu bevorzugen:

| | bevorzugt | besonders bevorzugt |
|---|---|---|
| | (Gew.-%) | (Gew.-%) |
| Isophthalsäure (IPA) | 1 - 10 | 4 - 8 |
| DEG (Diethylenglykol) | 1 - 10 | 1 - 3 |
| andere Diole | 0,7 - 10 | 1 - 2 |
| andere Dicarbonsäuren als Terephthalsäure | 1 - 10 | 1,5 - 4 |

Die Copolyesterkomponenten können untereinander kombiniert werden. Es sollten jedoch (aus den oben erwähnten Gründen) nicht mehr als zwei Modifizierungskomponenten ausgewählt werden, und die anderen möglichen Komponenten sollten dann unterhalb der als bevorzugt angegebenen Bereiche liegen. Weiterhin sollten bei einer Kombination nicht beide Komponenten im Bereich der Obergrenzen des bevorzugten Bereiches liegen. Idealerweise lägen bei mehr als einer Comonomerkomponente beide innerhalb des als besonders bevorzugt ausgewiesenen Bereiches, d. h. eine Folie mit 4 Gew.-% IPA und 2 Gew.-% DEG (beide innerhalb des besonders bevorzugten Bereiches) sollte weniger als 0,7 Gew.-% andere Diole und weniger als 1 Gew.-% andere Dicarbonsäuren enthalten (weniger als die jeweilige Untergrenze des bevorzugten Bereiches).

Die Herstellung der Polyester kann z. B. nach dem Umesterungsverfahren erfolgen. Dabei geht man von Dicarbonsäureestern und Diolen aus, die mit den üblichen Umesterungskatalysatoren wie Zink-, Calcium-, Lithium-, Natrium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus. Erfindungsgemäße Polyester sind als Handelsprodukte erhältlich.

Der mit Silber beladene Zeolith wird der Deckschicht (A) in einer Konzentration von 0,5 bis 15 Gew.-% zugegeben. Bevorzugt sind dabei Beladungen von 1 - 6 Gew.-% und besonders bevorzugt von 1,5 - 3,5 Gew.-%. Je höher die Beladung mit Zeolith desto größer ist die Beeinträchtigung der Oberflächenqualität und der Optik der Folie, d. h. die Rauheit und die Trübung nehmen zu. Die Trübung beeinträchtigt häufig das Aussehen des fertigen Produktes (z. B. Stahlblech) und ist in der Regel unerwünscht, Ausnahmen stellen jedoch weiße oder Folien mit mattem Design dar. Eine hohe Rauheit erleichtert das Anheften von Keimen auf der Oberfläche und ist daher ebenfalls unerwünscht. Die Rauheit der Oberfläche sollte im Allgemeinen unterhalb eines Rₐ von 1000 nm, bevorzugt unterhalb von 600 nm und besonders bevorzugt unterhalb von 300 nm liegen.

Die mittlere Teilchengröße (d₅₀) der Zeolithe liegt dabei in der Regel zwischen 0,5 und 15 µm, bevorzugt zwischen 1,8 und 6 µm und besonders bevorzugt zwischen 2,1 und 3,5 µm. Es hat sich dabei gezeigt, dass kleinere Zeolithe Silber zwar schneller freisetzen und damit, bei gleicher Beladung und Silberkonzentration in der Schicht, die Anfangsaktivitäten mit kleineren Zeolithen (< 1,8 µm) besser sein können als mit großen. Nach einer Reihe von Reinigungszyklen (siehe Beschreibung der Messmethoden) hat es sich aber immer als günstig erwiesen, größere Zeolithe (> 1,8 µm) zu verwenden, um einen Erhalt der Wirksamkeit zu gewährleisten. Bei großen Zeolithen (> 6 µm) und insbesondere bei sehr großen Zeolithen (> 15 µm) wird die Verteilung an der Oberfläche zu ungleichmäßig, um eine ausreichende Wirksamkeit gegen Bakterien zu gewährleisten. Dies lässt sich zwar durch eine Steigerung der Beladung ausgleichen, hat dann aber Nachteile in der Wirtschaftlichkeit und in der Prozesssicherheit der Folie, da es bei zu hohen Beladungen, insbesondere mit großen Partikeln, vermehrt zu Abrissen in der Folienproduktion kommt.

Allgemein nimmt mit der Größe des Zeolithen auch der Abrieb in der Herstellung und in der Weiterverarbeitung sowie in der Endanwendung zu. Dies führt neben dem ohnehin unerwünschten Staub auch zu einem Verlust an Wirksamkeit. Daher hat sich der oben angegebene Bereich von 2,1 bis 3,5 µm als besonders günstig erwiesen.

Im Allgemeinen hat es sich als ungünstig für den Abrieb erwiesen, wenn der d₅₀-Wert der Größenverteilung des Zeolithen mehr als das Doppelte der Schichtdicke der den Zeolithen enthaltenden Schicht ausmacht. In manchen Anwendungen, die nur eine kurzzeitige Aktivität erfordern (z. B. Verpackungen) hat es sich als günstig erwiesen, wenn neben den Zeolithen mit Teilchengrößen im bevorzugten Bereich noch einmal 20 - 60 Gew.-% (der Menge an diesen bevorzugten Teilchen) Zeolithe mit einer Teilchengröße < 1,8 µm und ≥ 0,5 µm zugegeben werden.

Die Menge an Silber im Zeolith liegt bevorzugt bei 0,5 bis 20 Gew.-% und besonders bevorzugt bei 3 - 6 Gew.-%. Es hat sich zudem als günstig erwiesen, wenn der Zeolith 1 - 20 Gew.-% Zink und/oder Kupfer enthält. Bevorzugt enthält der Zeolith mindestens 6 Gew.-% Zink oder/und Kupfer. Die Herstellung der Zeolithe erfolgt nach bekannten Verfahren wie sie z. B. in JP 11193358, EPA-0 297 538 oder US 2004/147654 beschrieben sind. Erfindungsgemäß verwendbare Zeolithe sind z. B. unter den Handelsnamen Bactekiller (Kanebo, JP) oder Zeomic (Sinanen, JP) erhältlich.

Neben der Beladung mit Zeolith hat sich insbesondere das Verhältnis aus Teilchengröße des Zeoliths und Schichtdicke der damit ausgerüsteten Schicht als besonders wichtig erwiesen. Die Schichtdicke liegt dabei zwischen 0,75 und 8 µm und bevorzugt zwischen 1,5 und 5 µm und besonders bevorzugt zwischen 2 und 2,9 µm. Die Schicht ist dabei nicht dicker als das 1,3 fache der mittleren Teilchengröße des Zeolithen und liegt bevorzugt zwischen dem 0,8- und 1,1fachen der mittleren Teilchengröße des Zeolithen. Ist die Schicht dünner als das 0,8fache der mittleren Teilchengröße, erhöht sich das Abriebrisiko, und ist sie größer als das 1,3fache, nimmt die PET-Schichtdicke über eine zunehmende Zahl von Zeolithpartikeln eine Größe an, die die Migration von Silber in das Außenmedium schwierig bis unmöglich macht. Diese Partikel sind damit für die Wirksamkeit verloren und verringern die Wirtschaftlichkeit der Folie.

Neben den Zeolithen kann die Folie weitere anorganische und/oder organische Partikel enthalten. Diese sind beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikeln, z. B. Polystyrol- oder Acrylat-Partikel. In der/den antimikrobiell ausgestatten Schicht/en sollte der Anteil solcher Partikel 2000 ppm nicht überschreiten und liegt bevorzugt unter 1000 ppm. Eine Ausnahme von dieser Regel stellen nur weiße Folienvarianten dar, wobei die eingesetzten Weißpigmente (bevorzugt TiO₂ oder BaSO₄) hierbei mindestens in der antimikrobiell ausgestatteten Schicht eine mittlere Teilchengröße unter 1,8 µm aufweisen sollten, um die Oberflächenrauheit nicht zu stark zu erhöhen.

Eine nicht antimikrobiell ausgestattete Deckschicht enthält bevorzugt mindestens 200 ppm Partikel und besonders bevorzugt mindestens 500 ppm und bevorzugt unter 2000 ppm Partikel.

In einer bevorzugten Ausführungsform enthält die Folie zudem mindestens einen UV-Stabilisator. Im Prinzip können sämtliche organischen und anorganischen UV Stabilisatoren, die für die Einarbeitung in Polyestern geeignet sind, ausgewählt werden. Solche geeigneten UV-Stabilisatoren sind nach dem Stand der Technik bekannt und z. B. in WO 98/06575, EP-A-0 144 878, EP-A-0 031 202, EP-A-0 031 203 oder EP-A-0 076 582 näher beschrieben. Geeignet sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und/oder Triazine, wobei die Triazine bevorzugt sind. Bevorzugt enthält die dem Licht zugewandte Schicht der Folie mindestens 50 % mehr UV-Stabilisator (in Gew.-%) als die übrigen Schichten, wobei die Gesamtkonzentration an Lichtschutzmittel in der Folie vorzugsweise im Bereich von 0,2 Gew.-% bis 5,0 Gew.-% liegt.

Die Zugabe von UV-Schutzmitteln verhindert ein mechanisches Versagen der Folie über die Zeit, insbesondere in Außenanwendungen. Daneben reduziert das UV-Schutzmittel auch die Zunahme der Gelbzahl im Laufe der Alterung der Folie. Die Zugabe von silberhaltigem Zeolith führt aber auch ohne Alterung durch Lichteinfluss bereits bei der Produktion zu einem sichtbaren Gelb- bis Braunstich. Neben den Photostabilisatoren enthält die Folie daher bevorzugt mindestens einen blauen Farbstoff, um die durch den Silberzeolith ausgelösten Gelbstich zu kompensieren. Bevorzugt werden hierbei Farbstoffe verwendet, die im Polyester löslich sind, und keine Pigmente, da im Falle der Verwendung letzterer die Zugabemenge für den gleichen Effekt erhöht werden muss und eine zusätzliche Rauheit über diese Partikel erzeugt wird. Hier können beispielsweise die folgenden Blaufarbstoffe verwendet werden: Clariant Blue RBL, Blue RLS (Ciba, CH); Lanxess (vormals Bayer) Blue 3R Gran, Blue RR Gran (Lanxess, DE); Ciba Filester types Blue GN (Ciba, CH). Es hat sich als vorteilhaft erwiesen, neben den blauen Farbstoffen auch einen Grünfarbstoff wie IRGALITE GREEN GFNP (Ciba SC, Basel CH) hinzuzugeben, um eine neutrale Farbe zu erreichen. Bevorzugt liegt der Gehalt an Blaufarbstoffunter 200 ppm in der Folie, und der Anteil an Grünfarbstoff liegt bevorzugt unter 100 ppm. In der bevorzugten Ausführungsform liegt die Gelbzahl der Folie unter 7 und besonders bevorzugt unter 3. Eine Farbstabilisierung ist insbesondere dann von Bedeutung, wenn das bei der Herstellung anfallende Regenerat erneut eingesetzt werden soll. Zweckmäßigerweise wird ein Teil des Regenerates in die antimikrobiell ausgestattetet Deckschicht zurückgeführt. Der Anteil an Regenerat sollte in keiner Schicht 50 % übersteigen, da aufgrund der hygroskopischen Natur des Zeolithen bei höheren Anteilen Laufsicherheitsprobleme auftreten.

Neben diesen Stabilisatoren und Farbstoffen kann die Folie weiterhin optische Aufheller wie Ciba Tinopal OB-One oder andere enthalten. Gegenüber der Zugabe von Blaufarbstoff ist diese Zugabe jedoch weniger bevorzugt, da optische Aufheller ihren Effekt nur bei Vorhandensein von ausreichend UV-Licht entfalten können.

Die Gesamtdicke der erfindungsgemäßen Polyesterfolie kann innerhalb weiter Grenzen variieren. Sie beträgt bevorzugt 8 bis 500 µm, besonders bevorzugt 10 bis 51 µm und ganz besonders bevorzugt 12 bis 23 µm.

Die Folie kann weiterhin ein- oder beidseitig beschichtet werden. Neben den üblichen Aufgaben solcher Beschichtungen z. B. zur Haftvermittlung können die Beschichtungen auch einen positiven Einfluss auf die antimikrobiellen Eigenschaften der Folie haben. So hat es sich gezeigt, dass Acrylatbeschichtungen wie sie z. B. in EP-A-0 144 948 beschrieben sind, zwar die antimikrobielle Anfangsaktivität der Folie herabsetzen, dafür aber durch den Abrieb der Beschichtung über die Zeit und mit den Reinigungszyklen weitere Austrittsmöglichkeiten für Silber freisetzen und so eine längere Wirksamkeit der Folie gewährleisten. Hierzu eignen sich neben vernetzenden Acrylaten prinzipiell alle Beschichtungen, die im fertigen Zustand nicht mehr wasserlöslich sind, wie z. B. auch Silikonbeschichtungen, wasserunlösliche Wachse und Polyester. Um eine ausreichende Anfangsaktivität der Folie zu gewährleisten, sollte die Beschichtung eine Dicke unter 1 µm, bevorzugt unter 500 µm und besonders bevorzugt unter 350 nm aufweisen.

Neben solchen Beschichtungen hat es sich als günstig erwiesen, wenn die Beschichtung nicht migrierende, intrinsisch antimikrobielle Komponenten enthält. Besonders geeignet sind Ammoniumsilane der folgenden allgemeinen Formel: 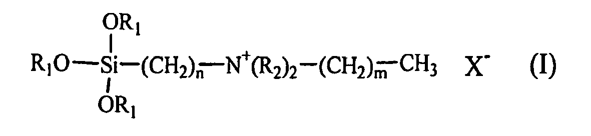 wobei
- R₁ und R₂: jeweils gleich oder verschieden sind und unabhängig voneinander Wasserstoff- oder C1-C8-Alkylreste sind, die geradkettig oder - im Falle der C3-C8-Alkyl- reste - verzweigt sein können, bevorzugt sind R₁ und R₂ gleich und bedeuten -CH₃; in wässrigen Dispersionen bedeuten ein, zwei oder alle R₁-Reste Wasserstoff;
- n: größer als 0 und kleiner als 10 ist, bevorzugt 2 - 5 und besonders bevorzugt 3;
- m: größer als 0 und kleiner als 30 ist, bevorzugt 6 - 25 und besonders bevorzugt 15 - 20 und ganz besonders bevorzugt 17;
- X⁻: Chlorid, Sulfat oder Nitrat ist.

Solche Verbindungen sind z. B. von Aegis (USA) oder Sanitized (CH) erhältlich. Sie können sowohl allein oder auch bevorzugt mit dem oben erwähnten Acrylat oder anderen im fertigen Zustand wasserunlöslichen Beschichtungen aufgetragen werden.

Diese Beschichtungen können sowohl off-line als auch bevorzugt in-line (bei der Polyesterfolienherstellung) mit den bekannten Beschichtungsverfahren hergestellt werden, wobei das "reverse gravure"-Verfahren bevorzugt ist.

### Herstellungsverfahren

Die Erfindung betrifft auch ein Verfahren zur Herstellung der erfindungsgemäßen Polyesterfolie nach dem an sich aus der Literatur bekannten Coextrusionsverfahren.

Der silberhaltige Zeolith wird bevorzugt über ein Masterbatch in die entsprechende Schicht eingebracht. Hierzu werden Zeolith und Polyester in einem Mehrschneckenextruder gemischt und durch eine Lochdüse extrudiert und granuliert. Auf die Anforderungen zur Feuchte des Zeoliths vor der Masterbatch-Herstellung ist bereits in US-A-5,556,699 hingewiesen worden. Diese Anforderungen gelten auch in der vorliegenden Erfindung.

Im Rahmen des Folienherstellverfahrens wird so vorgegangen, dass die den einzelnen Schichten entsprechenden Polymere, gegebenenfalls inklusive der Additive, in einem Extruder aufgeschmolzen werden und durch eine Flachdüse coextrudiert werden, die so erhaltene Vorfolie zur Verfestigung auf einer oder mehreren Walzen abgezogen wird, die Vorfolie anschließend biaxial gestreckt, die biaxial gestreckte Folie thermofixiert und dann aufgerollt wird.

Das Polymer für die antimikrobiell ausgerüstete Deckschicht (A) wird dabei bevorzugt ohne vorherige Trocknung in einem Zweischneckenextruder aufgeschmolzen. Eine vorherige Trocknung, wie sie bei Verwendung eines Einschneckenextruders notwendig wäre, würde über die zusätzliche Temperaturbelastung zu einer Zunahme des erwähnten Gelbstichs führen. Während der Extrusion werden bevorzugt Temperaturen von 300 °C nicht überschritten, und besonders bevorzugt werden 295 °C und idealerweise insbesondere in dem Extruder für Deckschicht (A) Temperaturen von 290 °C nicht überschritten, da auch hier eine zu hohe Temperatur zu einer Zunahme des Farbstichs führt. Auf der anderen Seite sollten aber auch Extrusionstemperaturen von 275 °C und idealerweise von 280 °C nicht unterschritten werden, da sonst durch die Zunahme der Scherung einzelne Zeolithe zerkleinert werden können.

Die biaxiale Streckung (Orientierung) wird im Allgemeinen aufeinanderfolgend durchgeführt, kann aber auch simultan erfolgen, wobei die aufeinanderfolgende biaxiale Streckung, bei der zuerst längs (in Maschinenrichtung) und dann quer (senkrecht zur Maschinenrichtung) gestreckt wird, bevorzugt ist. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im Allgemeinen werden die Längsstreckung bei einer Temperatur im Bereich von 80 bis 130 °C und die Querstreckung bei einer Temperatur im Bereich von 90 bis 150 °C durchgeführt. Das Längsstreckverhältnis liegt allgemein im Bereich von 2,5:1 bis 6:1, zum Einstellen der gewünschten mechanischen Eigenschaften (s. u.) bevorzugt im Bereich von 3,0:1 bis 5,5:1. Das Querstreckverhältnis liegt allgemein im Bereich von 3,0:1 bis 5,0:1, zum Einstellen der gewünschten mechanischen Eigenschaften (s.u.) bevorzugt im Bereich von 3,5:1 bis 4,5:1.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie in üblicher Weise aufgewickelt.

Die erwähnten Beschichtungen werden bevorzugt in-line mittels wässriger Dispersionen vor dem Streckschritt in Querrichtung auf die Folie aufgebracht.

Folien, die nach dem oben genannten Verfahren unter Verwendung der beschriebenen Ausgangsmaterialien hergestellt wurden, weisen in beiden Folienrichtungen einen E-Modul von größer 2000 N/mm², bevorzugt größer 3000 N/mm² und besonders bevorzugt größer 3800 N/mm², auf. Für den erfindungsgemäßen Einsatz sind solche mechanischen Eigenschaften vorteilhaft, da sich die Folie sonst bei mechanischer Belastung zu leicht verdehnt, was die Verbindung zwischen Matrix und Zeolith löst und so zu einem Herausfallen der Partikel aus der Folie führen kann.

### Vorteile der Erfindung

Die erfindungsgemäße Folie weist eine sehr gute Wirksamkeit gegen Bakterien auf. Die Wirkung ist zudem auch nach einer Reihe von Reinigungszyklen noch erhalten. Die Folie lässt sich zudem gut herstellen und weist eine geringe Verfärbung auf. In der siegelfähigen Variante siegelt sie gegen sich selbst und gegen Substrate aus verschiedenen Polymeren wie Polyamid, Polycarbonat und Metalle (z. B. Aluminium, Stahl, lackierter Stahl, verchromter oder verzinnter Stahl). Die Folie ist damit in vielen Bereichen einsetzbar. Besonders geeignet ist die Folie aber auch in nicht siegelfähigen Varianten für eine Aufbringung auf Metalle und andere Substrate nach den in WO 2006/102858 A2 und WO 2006/102957 A2 beschriebenen Verfahren.

Die Rohstoffe für alle Schichten der Folie sind im Wesentlichen Polyester, die eine Rezyklierung der während der Produktion anfallenden Restmengen erlauben und durch eine Rückführung in die silberhaltige Schicht erhebliche Kosteneinsparungen möglich machen. Weiterhin ist durch die Rohstoffauswahl gewährleistet, dass die antimikrobiell ausgerüstete Schicht nicht mit Wasser oder im Reinigungsbereich üblichen Lösemitteln abgewaschen werden kann. Die antimikrobiell ausgerüstete Schicht ist auch nicht bei Raumtemperatur oder bei üblichen Verarbeitungstemperaturen (bis ca. 110 °C) siegelfähig (d. h. klebrig) und somit ausreichend stabil gegen Zerstörung. Die antimikrobiell ausgerüstete Schicht wird durch Coextrusion direkt bei der Basisschichtherstellung aufgebracht und nicht in einem kostenintensiven zweiten Prozessschritt oder gar aus Lösung unter Verwendung von Lösungsmitteln.

Die Folien gemäß der Erfindung und der daraus hergestellten Artikel eignen sich aufgrund ihrer hervorragenden Eigenschaftskombinationen für eine Vielzahl verschiedener Anwendungen, beispielsweise für Innenraumverkleidungen, Möbelverkleidung, Klimaanlagen, Filtergehäuse, medizinische Geräte, Wände von Kühlhäusern, medizinische Verpackungen, Lebensmittelverpackungen, den Sanitärbereich, Hygieneartikel, Wundpflaster, die Anwendung in Bekleidung, Folienanwendung in Gewächshäuser, etc.

Zur Charakterisierung der Rohstoffe und der Folien wurden im Rahmen der vorliegenden Erfindung die folgenden Messmethoden benutzt:

### Messung des mittleren Partikeldurchmessers d₅₀ an Partikeln vor der Einbringung in den Rohstoff

Die Bestimmung des mittleren Partikeldurchmessers d₅₀ wird mittels Laser auf einem Master Sizer (Malvern Instruments, UK) nach der Standardmethode durchgeführt. Andere Messgeräte sind z. B. Horiba LA 500 (Horiba Ltd., JP) oder Helos (Sympatec GmbH, DE), welche das gleiche Messprinzip verwenden. Die Proben werden dazu in eine Küvette mit Wasser gegeben und diese dann in das Messgerät gestellt. Der Messvorgang ist automatisch und beinhaltet auch die mathematische Bestimmung des d₅₀-Wertes. Der d₅₀-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse den gewünschten d₅₀-Wert.

### Messung des mittleren Partikeldurchmessers d₅₀ an Zeolith-Partikeln in der Folie

Die Folie wird zur Betrachtung der antimikrobiell ausgerüsteten Seite in ein Rasterelektronenmikroskop eingebracht. An 10 unterschiedlichen Stellen auf der Oberfläche werden auf je 100 · 100 µm² großen Stücken alle Zeolithe > 0,4 µm vermessen und die mittlere Teilchengröße der Stücke bestimmt, und das Mittel der 10 Teilstücke ergibt den d₅₀-Wert der Partikel in der Folie. Die Zeolithe können dabei aufgrund ihrer charakteristischen Form oder im Zweifel per EDX-Elementanalyse identifiziert werden.

Der d₅₀-Wert wird bevorzugt an den eingesetzten (freien, kommerziell erhältlichen) Partikeln gemessen. Wenn dies nicht möglich ist, z. B. in der Folie selbst oder bei Lieferung der Partikel bereits fertig als Masterbatch, kann auch die Methode über die Auszählung in der Folie gewählt werden. Es wird dabei angenommen, dass beide Messverfahren im Rahmen der Messungenauigkeiten zu gleichen Ergebnissen führen, was bei schonenden Herstellverfahren auch der Fall ist. Ist dem Folienhersteller bekannt, dass z. B. aufgrund hoher Scherkräfte in den Extrudern die mittleren Partikeldurchmesser in der Folie von denen der freien, kommerziell erhältlichen Partikel abweichen, so kann über eine Messreihe in der Folie und eine Normierung mit Partikeln mit bekanntem d₅₀-Wert eine Korrelation zwischen dem d₅₀-Wert der freien Partikel und dem d₅₀-Wert der Partikel in der Folie hergestellt werden, so dass aus den Daten, gemessen in der Folie, auf die d₅₀-Werte in den freien Partikel extrapoliert werden kann und umgekehrt.

### Messung der mechanischen Eigenschaften der Folie

Die Bestimmung der mechanischen Eigenschaften erfolgt nach DIN EN ISO 527-1 bis 3.

### Trübung

Die Trübung wird in Anlehnung an ASTM D 1003 - 52 bestimmt.

### Rauigkeit

Die Rauigkeit Rₐ der Folie wird nach DIN 4768 bestimmt.

### Gelbwert (Gelbzahl)

Der Gelbwert G (YID) ist die Abweichung von der Farblosigkeit in Richtung "Gelb" und wird gemäß DIN 6167 gemessen.

### Messung der antimikrobiellen Aktivität

Die antimikrobielle Aktivität wird in Anlehnung an JIS Z 2801 bestimmt, wobei eine antimikrobielle Wirkung als gut beurteilt wird, wenn die Menge an Escherichia coli um mindestens 3 Zehnerpotenzen reduziert wird, und als akzeptabel, wenn mindestens eine Reduktion um eine Zehnerpotenz festgestellt wird.

### Messung der antimikrobiellen Aktivität nach Reinigung

Die Folie wird 2-mal mit einem Baumwolltuch von Hand abgewischt und anschließend über Nacht an der Luft getrocknet. Das Baumwolltuch ist dabei mit einer Mischung aus 99 % Wasser und 1 % Pril^{®} (Geschirrspülmittel flüssig) der Firma Henkel (DE) getränkt. Anschließend wird die Folie nochmals 2-mal mit einem Baumwolltuch von Hand abgewischt und anschließend wiederum über Nacht an der Luft getrocknet. Das Baumwolltuch ist dabei mit einer Mischung aus 95 % Wasser und 5 % Ethanol getränkt. Beide Prozeduren werden je 50-mal wiederholt. Nach dieser Prozedur wird nach einem Tag Wartezeit bei 25 °C und 50 % rel. Luftfeuchte wie oben angegeben die antimikrobielle Aktivität bestimmt.

### Abrisse bei der Folienberstellung

Die Anzahl der Folienabrisse pro Zeiteinheit in der Produktion wird mit der bei Herstellung von Folien nach dem Stand der Technik verglichen und die prozentuale Abweichung festgestellt.

### Beispiel 1

Es wurde eine dreischichtige Folie der Dicke 20 µm hergestellt. Die antimikrobielle Deckschicht (A) hat eine Dicke von 2,2 µm. Die siegelfähige Deckschicht (C) ist 2,0 µm dick. Die Basisschicht (B) ist 15,8 µm dick. Die Rohstoffe wurden für jede Schicht separat in einem Zweischneckenextruder aufgeschmolzen und durch eine Dreischicht-Flachdüse extrudiert.

Die Rohstoffe MB 1 - 5 enthalten 0,9 bis 1,3 Gew.-% DEG; RT49 enthält 0,6 Gew.-% DEG; alle genannten Rohstoffe (bis auf S1) enthalten < 0,2 Gew.-% IPA und < 0,1 Gew.-% andere Diole und Dicarbonsäuren.

In der Basisschicht (B) wurden die folgenden Rohstoffe dosiert:

| | |
|---|---|
| 10 Gew.-% | MB1 = 10 Gew.-% UV-Stabilisator Cyasorb 1164 (Cytec Inc., USA) und 90 Gew.-% Polyethylenterephthalat (hergestellt durch Einarbeiten des UV-Stabilisators in den Polyester in einem Zweischneckenextruder) |
| 90 Gew.-% | Polyethylenterephthalat RT49 der Firma Invista (DE) |

In der antimikrobiell ausgerüsteten Deckschicht (A) kamen die folgenden Rohstoffe zum Einsatz:

| | |
|---|---|
| 20 Gew.-% | MB1 |
| 20 Gew.-% | MB 2 = 10 Gew.-% silberhaltiges Zeolith AK80H (Agion, USA) (d₅₀ = 2 µm, Zeolith mit 5 Gew.-% Silber und 13 Gew.% Zink) und 90 Gew.-% Polyethylenterephthalat (hergestellt durch Einarbeiten des Zeoliths in den Polyester in einem Zweischneckenextruder) |
| 60 Gew.-% | Polyethylenterephthalat RT49 der Firma Invista (DE) |

Die Rohstoffe für die siegelfähige Deckschicht (C):

| | |
|---|---|
| 97 Gew.-% | S1, bestehend aus einem amorphen Copolyester mit 80 Mol-% Ethylen-terephthalat und 20 Mol-% Ethylenisophthalat (hergestellt über das Umesterungs-verfahren mit Mₙ als Umesterungskatalysator, Mₙ-Konzentration: 100 ppm) |
| | |
| 3 Gew.-% | MB3 = 10000 ppm SiO₂ Partikel (Sylysia 320 vom Hersteller Fuji Silysia (JP) mit Partikelgröße d₅₀ = 2,5 µm) und 99 Gew.-% Polyethylenterephthalat |

Dann wurde durch Coextrusion und anschließende stufenweise Orientierung in Längs- und Querrichtung eine transparente, dreischichtige Folie mit ABC-Aufbau hergestellt.

Die Herstellungsbedingungen in den einzelnen Verfahrensschritten waren:

| | | | | |
|---|---|---|---|---|
| Extrusion | Temperaturen | A-Schicht: | 281 | °C |
| | | B-Schicht: | 283 | °C |
| | | C-Schicht: | 285 | °C |
| | Temperatur der Abzugswalze | | 20 | °C |
| Längsstreckung | Aufheiztemperatur | | 70-120 | °C |
| | Strecktemperatur | | 115 | °C |
| | Längsstreckverhältnis | | 3,7 | |
| Querstreckung | Aufheiztemperatur | | 100 | °C |
| | Strecktemperatur | | 125 | °C |
| | Querstreckverhältnis | | 4 | |
| Fixierung | Temperatur | | 232 | °C |
| | Dauer | | 3 | s |

E-Module:
Längrichtung: 4500 N/mm²
Querrichtung: 5100 N/mm²
Gelbzahl: 2,4
Rauigkeit Rₐ: 200 nm

Antimikrobielle Wirkung
Reduktion Escherichia coli nach 24 h um 3,1 Zehnerpotenzen
- nach Reinigung: Reduktion Escherichia coli nach 24 h um 2,8 Zehnerpotenzen

### Beispiel 2

Es wurde eine Folie wie in Beispiel 1 beschrieben hergestellt, jedoch war die antimikrobielle Deckschicht wie folgt zusammengesetzt:
20 Gew.-% MB 1
20 Gew.-% MB 2
25 Gew.-% S1
35 Gew.-% RT49

E-Module:
Längrichtung: 4450 N/mm²
Querrichtung: 5060 N/mm²
Gelbzahl: 2,5

Antimikrobielle Wirkung
Reduktion Escherichia coli nach 24 h um 3,5 Zehnerpotenzen
- nach Reinigung: Reduktion Escherichia coli nach 24 h um 3,3 Zehnerpotenzen

### Beispiel 3

Es wurde eine Folie wie in Beispiel 2 beschrieben hergestellt, jedoch wurden in der Basisschicht (B) die folgenden Rohstoffe verwendet:

| | |
|---|---|
| 8,5 Gew.-% | MB1 |
| 20 Gew.-% | Eigenregenerat (Regenerierung erfolgte mittels eines Zweischneckenextruders (Temperatur max 285 °C) mit anschließender Granulierung |
| 71,5 Gew.-% | Polyethylenterephthalat RT49 der Firma Invista (DE) |

Die antimikrobielle Deckschicht (A) war folgendermaßen zusammengesetzt:
13 Gew.-% MB 1
18 Gew.-% MB 2
17 Gew.-% S 1
30 Gew.-% Eigenregenerat
22 Gew.-% RT49

E-Module:
Längrichtung: 4300 N/mm²
Querrichtung: 4950 N/mm²
Gelbzahl: 3,1

Antimikrobielle Wirkung
Reduktion Escherichia coli nach 24 h um 3,5 Zehnerpotenzen
- nach Reinigung: Reduktion Escherichia coli nach 24 h um 3,2 Zehnerpotenzen

### Beispiel 4

Es wurde eine Folie wie in Beispiel 3 beschrieben hergestellt, jedoch betrug die Extrusionstemperatur im Basis- und Deckschicht-A-Extruder 295 °C.

E-Module:
Längrichtung: 4300 N/mm²
Querrichtung: 4950 N/mm²
Gelbzahl: 4,8

Antimikrobielle Wirkung
Reduktion Escherichia coli nach 24 h um 3,6 Zehnerpotenzen
- nach Reinigung: Reduktion Escherichia coli nach 24 h um 3,2 Zehnerpotenzen

### Beispiel 5

Es wurde eine Folie wie in Beispiel 3 beschrieben hergestellt, jedoch hatte die antimikrobielle Deckschicht (A) folgende Zusammensetzung:
13 Gew.-% MB1
18 Gew.-% MB2
17 Gew.-% S1
30 Gew.-% Eigenregenerat
12 Gew.-% RT49

| | |
|---|---|
| 10 Gew.% | MB4 mit 1 Gew.-% Ciba Filester Blue GN und 0,1 Gew.-% IRGALITE GREEN GFNP und 98,5 Gew.-% Polyethylenterephthalat (DEG = 0,9 Gew.-% andere Comonomere unter 0,1 Gew.-%) |

E-Module:
Längrichtung: 4270 N/mm²
Querrichtung: 4958 N/mm²
Gelbzahl: 0,6

Antimikrobielle Wirkung
Reduktion Escherichia coli nach 24 h um 3,5 Zehnerpotenzen
- nach Reinigung: Reduktion Escherichia coli nach 24 h um 3,3 Zehnerpotenzen

### Beispiel 6

Es wurde eine Folie wie in Beispiel 1 beschrieben hergestellt, jedoch war die Deckschicht (C) genauso zusammengesetzt wie die antimikrobielle Deckschicht (A). Die Basisschichtdicke betrug 15,6 µm.

E-Module:
Längrichtung: 4500 N/mm²
Querrichtung: 5100 N/mm²
Gelbzahl: 3,7

Antimikrobielle Wirkung
Reduktion Escherichia coli nach 24 h um 3,2 Zehnerpotenzen
- nach Reinigung: Reduktion Escherichia coli nach 24 h um 2,8 Zehnerpotenzen

### Beispiel 7

Es wurde eine Folie wie in Beispiel 1 beschrieben hergestellt, jedoch wurde das MB1 in der Deckschicht und Basisschicht ersetzt durch RT49.

E-Module:
Längrichtung: 4550 N/mm²
Querrichtung: 5150 N/mm²
Gelbzahl: 1,7

Antimikrobielle Wirkung
Reduktion Escherichia coli nach 24 h um 3,2 Zehnerpotenzen
- nach Reinigung: Reduktion Escherichia coli nach 24 h um 2,9 Zehnerpotenzen

### Vergleichsbeispiel 1

Es wurde eine Folie wie in Beispiel 1 beschrieben hergestellt, jedoch wurde das MB2 ausgetauscht gegen MB5.

| | |
|---|---|
| MB5 = | 10 Gew.-% silberhaltiger Zeolith mit d₅₀ = 0,5 µm mit 5 Gew.-% Silber und 13 Gew.-% Zink und 90 Gew.-% Polyethylenterephthalat, hergestellt wie in US-A 5,556,699 beschrieben. Masterbatch hergestellt durch Einarbeiten des Zeoliths in den Polyester in einem Zweischneckenextruder. |

E-Module:
Längrichtung: 4480 N/mm²
Querrichtung: 5130 N/mm²
Gelbzahl: 2,5

Antimikrobielle Wirkung
Reduktion Escherichia coli nach 24 h um 3,3 Zehnerpotenzen
- nach Reinigung: Reduktion Escherichia coli nach 24 h um 1,6 Zehnerpotenzen

### Vergleichsbeispiel 2

Es wurde eine Folie wie in Beispiel 1 beschrieben hergestellt, jedoch betrug die Schichtdicke der antimikrobiellen Deckschicht 9 µm und die der Basisschicht 9 µm.

Zwar zeigten sich sowohl gute Startaktivitätswerte mit einer Reduktion um 3,2 Zehnerpotenzen und auch gute Werte nach Reinigung mit einer Reduktion um 2,9 Zehnerpotenzen. Der mehr als 3mal höhere Gehalt an teuerem Silberzeolith zeigte jedoch keine signifikant bessere Wirkung.

E-Module:
Längrichtung: 4490 N/mm²
Querrichtung: 5090 N/mm²
Gelbzahl: 6,8

Antimikrobielle Wirkung
Reduktion Escherichia coli nach 24 h um 3,4 Zehnerpotenzen
- nach Reinigung: Reduktion Escherichia coli nach 24 h um 2,9 Zehnerpotenzen

### Vergleichsbeispiel 3

Es wurde das Beispiel 2 aus der WO 2006/000755 nachgearbeitet.

Antimikrobielle Wirkung
Reduktion Escherichia coli nach 24h um 1,6 Zehnerpotenzen
- nach Reinigung: Reduktion Escherichia coli nach 24h um 0,8 Zehnerpotenzen

## Patentansprüche

1. Mindestens zweischichtige Polyesterfolie, die mindestens eine antimikrobiell ausgerüstete Deckschicht (A) aufweist, wobei diese antimikrobiell ausgerüstete Deckschicht (A)
a) 0,5 - 15 Gew.-% eines mit Silber beladenen Zeoliths enthält, bezogen auf die Masse der Deckschicht (A), und
b1) eine Schichtdicke < 8 µm aufweist, und
b2) diese Schichtdicke dabei nicht größer ist als das 1,3fache der mittleren Teilchengröße des Zeoliths.

2. Polyesterfolie nach Anspruch 1, **dadurch gekennzeichnet, dass** der mit Silber beladene Zeolith in der Deckschicht (A) in einer Konzentration von 1 - 6 Gew.-% vorhanden ist.

3. Polyesterfolie nach Anspruch 1 oder 2, **dadurch gekennzeichnet, dass** die mittlere Teilchengröße (d₅₀) des Zeoliths zwischen 0,5 und 15 µm liegt.

4. Polyesterfolie nach einem der Ansprüche 1 bis 3, **dadurch gekennzeichnet, dass** die Menge an Silber im Zeolith 0,5 bis 20 Gew.-%, bezogen auf die Masse des Zeoliths, beträgt.

5. Polyesterfolie nach einem der Ansprüche 1 bis 4, **dadurch gekennzeichnet, dass** der Zeolith 1 - 20 Gew.-% Zink und/oder Kupfer, bezogen auf die Masse des Zeoliths, enthält.

6. Polyesterfolie nach einem der Ansprüche 1 bis 5, **dadurch gekennzeichnet, dass** die Deckschicht (A) eine Schichtdicke von 0,75 bis 8 µm aufweist.

7. Polyesterfolie nach einem der Ansprüche 1 bis 6, **dadurch gekennzeichnet, dass** die Folie neben dem Zeolith noch weitere anorganische und/oder organische Partikel enthält.

8. Polyesterfolie nach einem der Ansprüche 1 bis 7, **dadurch gekennzeichnet, dass** die Folie eine weitere Deckschicht (C) aufweist.

9. Polyesterfolie nach Anspruch 8, **dadurch gekennzeichnet, dass** die Deckschicht (C) mindestens 200 ppm Partikel enthält, bezogen auf die Masse der Deckschicht (C).

10. Polyesterfolie nach einem der Ansprüche 1 bis 7, **dadurch gekennzeichnet, dass** die Folie mindestens einen UV-Stabilisator enthält.

11. Polyesterfolie nach Anspruch 10, **dadurch gekennzeichnet, dass** der UV-Stabilisator ein Triazin ist.

12. Polyesterfolie nach Anspruch 10 oder 11, **dadurch gekennzeichnet, dass** die in der beabsichtigten Anwendung dem Licht zugewandte Schicht der Folie mindestens 50 % mehr UV-Stabilisator (in Gew.-%) enthält als die übrigen Schichten.

13. Polyesterfolie nach Anspruch 10, 11 oder 12, **dadurch gekennzeichnet, dass** die Gesamtkonzentration an UV-Stabilisator in der Folie im Bereich von 0,2 Gew.-% bis 5,0 Gew.-% liegt.

14. Polyesterfolie nach einem der Ansprüche 1 bis 13, **dadurch gekennzeichnet, dass** die Folie mindestens einen Farbstoff enthält, der im Polyester löslich ist.

15. Polyesterfolie nach einem der Ansprüche 1 bis 14, **dadurch gekennzeichnet, dass** die Folie eine Gesamtdicke von 8 bis 500 µm aufweist.

16. Polyesterfolie nach einem der Ansprüche 1 bis 15, **dadurch gekennzeichnet, dass** die Folie ein- oder beidseitig beschichtet ist.

17. Verfahren zur Herstellung einer Folie nach Anspruch 1, wobei die den einzelnen Schichten entsprechenden Polymere in einem Extruder aufgeschmolzen werden und durch eine Flachdüse coextrudiert werden, die so erhaltene Vorfolie zur Verfestigung auf einer oder mehreren Walzen abgezogen wird, die Vorfolie anschließend biaxial gestreckt, die biaxial gestreckte Folie thermofixiert und dann aufgerollt wird, **dadurch gekennzeichnet, dass**
a) das Polymer der Deckschicht (A) 0,5 - 15 Gew.-% eines mit Silber beladenen Zeoliths enthält und
b1) die Deckschicht (A) in einer Dicke extrudiert wird, die nach biaxialer Orientierung und Thermofixierung zu einer Schichtdicke von < 8 µm führt, und
b2) diese Schichtdicke dabei nicht größer ist als das 1,3fache der mittleren Teilchengröße des Zeoliths.

18. Verwendung einer Folie nach Anspruch 1 als Innenraumverkleidung, Möbelverkleidung, in Klimaanlagen, Filtergehäusen, medizinischen Geräten, an Wänden von Kühlhäusern oder Kühlschränken, als medizinische Verpackung, Lebensmittelverpackung, im Sanitärbereich, für Hygieneartikel, Wundpflaster, in Bekleidung oder in Gewächshäusern.

## Claims

1. An at least two-layer polyester film, which has at least one antimicrobially modified outer layer (A), where this antimicrobially modified outer layer (A) has
a) from 0.5 to 15% by weight of a silver-loaded zeolite, based on the weight of the outer layer (A), and
b1) a layer thickness < 8 µm, and
b2) this layer thickness is not greater than 1.3 times the median particle size of the zeolite.

2. The polyester film as claimed in claim 1, wherein the concentration present of the silver-loaded zeolite in the outer layer (A) is from 1 to 6% by weight.

3. The polyester film as claimed in claim 1 or 2, wherein the median particle size (d₅₀) of the zeolite is from 0.5 to 15 µm.

4. The polyester film as claimed in any of claims 1 to 3, wherein the amount of silver in the zeolite is from 0.5 to 20% by weight, based on the weight of the zeolite.

5. The polyester film as claimed in any of claims 1 to 4, wherein the zeolite contains from 1 to 20% by weight of zinc and/or copper, based on the weight of the zeolite.

6. The polyester film as claimed in any of claims 1 to 5, wherein the thickness of the outer layer (A) is from 0.75 to 8 µm.

7. The polyester film as claimed in any of claims 1 to 6, which also comprises further inorganic and/or organic particles, alongside the zeolite.

8. The polyester film as claimed in any of claims 1 to 7, which has a further outer layer (C).

9. The polyester film as claimed in claim 8, wherein the outer layer (C) comprises at least 200 ppm of particles, based on the weight of the outer layer (C).

10. The polyester film as claimed in any of claims 1 to 7, which comprises at least one UV stabilizer.

11. The polyester film as claimed in claim 10, wherein the UV stabilizer is a triazine.

12. The polyester film as claimed in claim 10 or 11, wherein the layer facing toward the light in the intended application of the film comprises at least 50% more UV stabilizer (in % by weight) than the other layers.

13. The polyester film as claimed in claim 10, 11, or 12, whose total concentration of UV stabilizer is in the range from 0.2% by weight to 5.0% by weight.

14. The polyester film as claimed in any of claims 1 to 13, which comprises at least one dye, which is soluble in the polyester.

15. The polyester film as claimed in any of claims 1 to 14, whose total thickness is from 8 to 500 µm.

16. The polyester film as claimed in any of claims 1 to 15, which has been coated on one or both sides.

17. A process for the production of a film as claimed in claim 1, where the polymers corresponding to the individual layers are melted in an extruder and are coextruded through a flat-film die, the resultant prefilm is drawn off for solidification on one or more rolls, the prefilm is then biaxially stretched, and the biaxially stretched film is heat-set and then wound up, which comprises
a) the presence of from 0.5 to 15% by weight of a silver-loaded zeolite in the polymer of the outer layer (A), and
b1) extrusion of the outer layer (A) at a thickness which, after biaxial orientation and heat-setting, leads to a layer thickness of < 8 µm, and
b2) keeping this layer thickness to a value not greater than 1.3 times the median particle size of the zeolite.

18. The use of a film as claimed in claim 1 as interior cladding, furniture cladding, in air-conditioning systems, in filter housings, in medical equipment, on walls of cold stores or of refrigerators, as medical packaging, as food- or-drink packaging, in the sanitary sector, for hygiene items, for wound plasters, in apparel, or in greenhouses.

## Revendications

1. Feuille de polyester ayant au moins deux couches, qui présente au moins une couche de recouvrement (A) apprêtée de manière antimicrobienne, dans laquelle cette couche de recouvrement (A) apprêtée de manière antimicrobienne
a) contient 0,5 à 15 % en poids d'une zéolite chargée d'argent, par rapport à la masse de la couche de recouvrement (A), et
b1) présente une épaisseur de couche < 8 µm, et
b2) cette épaisseur de couche n'est en l'occurrence pas supérieure à 1,3 fois la taille particulaire moyenne de la zéolite.

2. Feuille de polyester selon la revendication 1, **caractérisée en ce que** la zéolite chargée d'argent est présente dans la couche de recouvrement (A) en concentration de 1 à 6 % en poids.

3. Feuille de polyester selon la revendication 1 ou 2, **caractérisée en ce que** la taille particulaire moyenne (d₅₀) de la zéolite se situe entre 0,5 et 15 µm.

4. Feuille de polyester selon l'une quelconque des revendications 1 à 3, **caractérisée en ce que** la quantité d'argent dans la zéolite se situe dans la plage de 0,5 à 20 % en poids par rapport à la masse de la zéolite.

5. Feuille de polyester selon l'une quelconque des revendications 1 à 4, **caractérisée en ce que** la zéolite contient 1 à 20 % en poids de zinc et/ou de cuivre par rapport à la masse de la zéolite.

6. Feuille de polyester selon l'une quelconque des revendications 1 à 5, **caractérisée en ce que** la couche de recouvrement (A) présente une épaisseur de couche de 0,75 à 8 µm.

7. Feuille de polyester selon l'une quelconque des revendications 1 à 6, **caractérisée en ce que** la feuille contient, outre la zéolite, encore d'autres particules inorganiques et/ou organiques.

8. Feuille de polyester selon l'une quelconque des revendications 1 à 7, **caractérisée en ce que** la feuille présente une autre couche de recouvrement (C).

9. Feuille de polyester selon la revendication 8, **caractérisée en ce que** la couche de recouvrement (C) contient au moins 200 ppm de particules par rapport à la masse de la couche de recouvrement (C).

10. Feuille de polyester selon l'une quelconque des revendications 1 à 7, **caractérisée en ce que** la feuille contient au moins un stabilisateur UV.

11. Feuille de polyester selon la revendication 10, **caractérisée en ce que** le stabilisateur UV est une triazine.

12. Feuille de polyester selon la revendication 10 ou 11, **caractérisée en ce que** la couche de la feuille, tournée vers la lumière dans l'application visée, contient au moins 50 % de stabilisateur UV (en % en poids) de plus que les autres couches.

13. Feuille de polyester selon la revendication 10, 11 ou 12, **caractérisée en ce que** la concentration totale de stabilisateur UV dans la feuille se situe dans la plage de 0,2 % en poids à 5,0 % en poids.

14. Feuille de polyester selon l'une quelconque des revendications 1 à 13, **caractérisée en ce que** la feuille contient au moins un colorant qui est soluble dans le polyester.

15. Feuille de polyester selon l'une quelconque des revendications 1 à 14, **caractérisée en ce que** la feuille présente une épaisseur totale de 8 à 500 µm.

16. Feuille de polyester selon l'une quelconque des revendications 1 à 15, **caractérisée en ce que** la feuille est revêtue sur un ou deux côtés.

17. Procédé pour la fabrication d'une feuille selon la revendication 1, dans lequel les polymères correspondant aux couches individuelles sont fondus dans une extrudeuse et co-extrudés à travers une filière pour feuilles, la préfeuille obtenue de la sorte est extraite à des fins de solidification sur un ou plusieurs cylindres, la préfeuille est ensuite étirée biaxialement, la feuille étirée biaxialement est soumise à une thermofixation, puis est enroulée, **caractérisé en ce que**
a) le polymère de la couche de recouvrement (A) contient 0,5 à 15 % en poids d'une zéolite chargée d'argent, et
b1) la couche de recouvrement (A) est extrudée avec une épaisseur qui donne, après une orientation biaxiale et une thermofixation, une épaisseur de couche < 8 µm, et
b2) cette épaisseur de couche n'est en l'occurrence pas supérieure à 1,3 fois la taille particulaire moyenne de la zéolite.

18. Utilisation d'une feuille selon la revendication 1, comme revêtement d'espace intérieur, revêtement de mobilier, dans des systèmes d'air conditionné, des boîtiers de filtre, des appareils médicaux, sur des parois d'entrepôts frigorifiques ou de réfrigérateurs, comme conditionnement médical, comme conditionnement pour produit alimentaire, dans le domaine sanitaire, pour des articles d'hygiène, pour des pansements, dans l'habillement ou dans les serres.
